# EUROPEAN PATENT APPLICATION

(11) **EP 4 068 476 A1**
(43) Date of publication of application: **05.10.2022**
(21) Application number: 22163721.8
(22) Date of filing: 23.03.2022
(51) Int. Cl.: H01M 50/105, H01M 50/178, H01M 50/186, H01M 50/193, H01M 50/211, H01M 50/278, H01M 50/293, H01M 50/591, H01M 50/242

(54) **POWER STORAGE DEVICE**

(30) Priority: 31.03.2021 JP 2021060587
(71) Applicant: TOYOTA JIDOSHA KABUSHIKI KAISHA, Toyota-shi, Aichi-ken, 471-8571 (JP)
(72) Inventor: KATO, Masashi, Toyota-shi, 471-8571 (JP)
(74) Representative: D Young & Co LLP

(57) **Abstract**

A power storage device (1) includes a plurality of power storage cells (101), a case (200) for accommodating the plurality of power storage cells, and a covering portion (15) made of an insulating material and covering a part of each of the plurality of power storage cells. Each power storage cell (101) includes a plurality of electrode bodies (110), a current collector plate (120) connected to the plurality of electrode bodies, a laminated film (130) covering the plurality of electrode bodies and a part of the current collector plate, and an electrolyte solution filling the laminated film. The current collector plate (120) includes a protrusion (122) protruding from the laminated film. The covering portion (15) covers the protrusion (122).

## Description

This nonprovisional application is based on Japanese Patent Application No. 2021-060587 filed on March 31, 2021 with the Japan Patent Office, the entire contents of which are hereby incorporated by reference.

### BACKGROUND

### Field

The present disclosure relates to a power storage device.

### Description of the Background Art

A power storage device including a plurality of power storage cells has conventionally been known. For example, Japanese Patent Laying-Open No. 2013-229266 discloses a battery module including a plurality of batteries stacked in one direction and a housing that surrounds the plurality of batteries. Each battery is a rectangular laminate-type battery with a laminated film as its exterior. An electrode tab formed of a thin metallic plate is pulled out from the center of each of the opposite ends, which are the short sides, of each battery.

### SUMMARY

In the battery module disclosed in Japanese Patent Laying-Open No. 2013-229266, the batteries may be short-circuited if an electrolyte solution leaks out of the laminated film.

An object of the present disclosure is to provide a power storage device that can reduce the occurrence of a short circuit when an electrolyte solution leaks out of a laminated film.

A power storage device according to an aspect of the present disclosure includes a plurality of power storage cells, a case for accommodating the plurality of power storage cells, and a covering portion made of an insulating material and covering a part of each of the plurality of power storage cells. Each of the plurality of power storage cells includes a plurality of electrode bodies, a current collector plate connected to the plurality of electrode bodies, a laminated film covering the plurality of electrode bodies and a part of the current collector plate, and an electrolyte solution filling the laminated film. The current collector plate includes a protrusion protruding from the laminated film. The covering portion covers the protrusion.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view schematically showing a configuration of a battery pack including a power storage device according to an embodiment of the present disclosure.
Fig. 2 is a sectional view taken along the line II-II in Fig. 1.
Fig. 3 is an exploded perspective view schematically showing a configuration of a power storage module.

### DESCRIPTION OF THE PREFERRED EMBODIMENTS

An embodiment of the present disclosure will be described with reference to the drawings. The same or corresponding elements in the drawings have the same reference characters allotted in the figures referenced below.

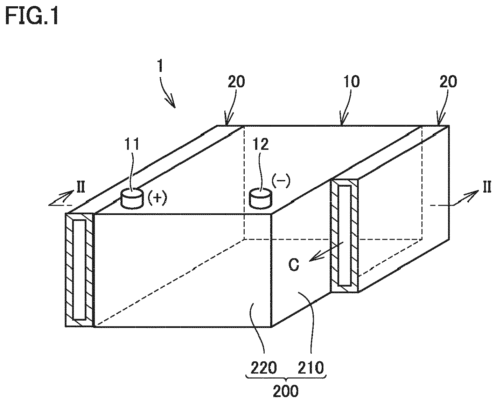

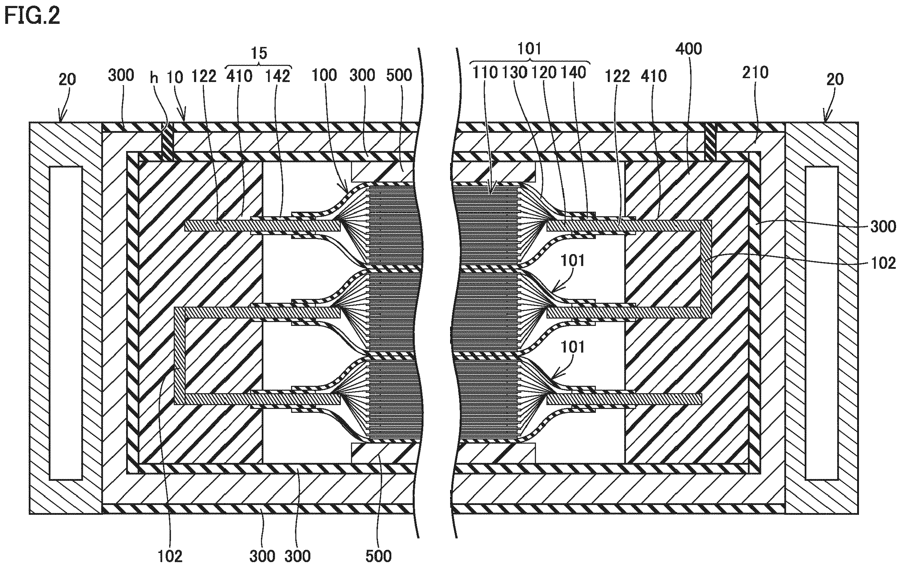

Fig. 1 is a perspective view schematically showing a configuration of a battery pack including a power storage device of an embodiment of the present disclosure. Fig. 2 is a sectional view taken along the line II-II in Fig. 1. Battery pack 1 is mounted on, for example, an electric-powered vehicle such as a battery electric vehicle.

As shown in Figs. 1 and 2, battery pack 1 includes a power storage device 10 and a cooling device 20. Cooling device 20 is a device that cools power storage device 10. Cooling device 20 is placed to be in contact with a lateral portion of power storage device 10. As shown in Fig. 1, cooling device 20 is configured to allow a cooling medium (such as water) C to flow therein. Fig. 1 shows a state in which a part of cooling device 20 is missing.

As shown in Fig. 1, power storage device 10 includes a pair of external terminals 11, 12. External terminal 11 is a positive electrode terminal, and external terminal 12 is a negative electrode terminal. As shown in Fig. 2, power storage device 10 includes a power storage module 100, a case 200, an insulating sheet 300, and a filling portion 400.

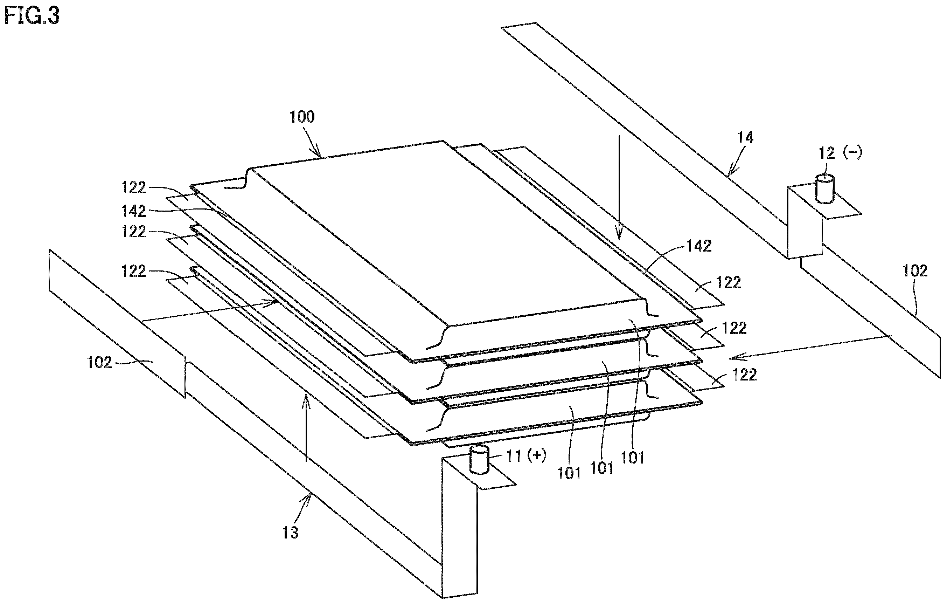

Fig. 3 is an exploded perspective view schematically showing a configuration of a power storage module. As shown in Figs. 2 and 3, power storage module 100 includes at least one power storage cell 101. In the present embodiment, power storage module 100 includes a plurality of power storage cells 101. Power storage cells 101 are stacked in one direction (the vertical direction in Fig. 1). Although Figs. 2 and 3 show three power storage cells 101, the number of power storage cells 101 is not particularly limited. An example of power storage cell 101 is a lithium ion battery.

Power storage cell 101 is a so-called laminate-type cell. Specifically, power storage cell 101 includes a plurality of electrode bodies 110, a current collector plate 120, a laminated film 130, an adhesive member 140, and an electrolyte solution (not shown).

Electrode bodies 110 are stacked in one direction. Electrode bodies 110 include a positive electrode sheet and a negative electrode sheet. A separator is placed between the positive electrode sheet and the negative electrode sheet. An end of each electrode body 110 is electrically connected to current collector plate 120.

Laminated film 130 covers electrode bodies 110 and a part of current collector plate 120. Laminated film 130 is filled with an electrolyte solution (not shown).

As shown in Figs. 2 and 3, current collector plate 120 includes protrusions 122 protruding from laminated film 130. Protrusions 122 are connected to one another by a bus bar 102 such that power storage cells 101 are electrically connected in series.

As shown in Fig. 3, protrusion 122 of power storage cell 101 placed at an end on one side in a direction is connected with a bus bar 13 provided with external terminal 11, and protrusion 122 of power storage cell 101 placed at an end on the other side in the direction is connected with a bus bar 14 provided with external terminal 12.

Adhesive member 140 is a member that bonds laminated film 130 to current collector plate 120. Adhesive member 140 is made of an insulating material (such as a resin). Adhesive member 140 is shaped to protrude from laminated film 130. Specially, adhesive member 140 includes a partly covering portion 142 (see Figs. 2 and 3) that covers a part of protrusion 122.

Case 200 accommodates power storage module 100. Case 200 is made of a metal (such as aluminum). Case 200 includes a case body 210 and a closing plate 220, as shown in Fig. 1.

Case body 210 has an opening that opens in at least one direction. In the present embodiment, case body 210 is shaped into a square tube having a central axis extending in a direction orthogonal to a direction of stacking of power storage cells 101. Case body 210 is provided with an inlet h (see Fig. 2).

Closing plate 220 is welded to case body 210 so as to close the opening of case body 210. Closing plate 220 is shaped into a flat plate.

Cooling device 20 is provided to be in contact with an outer lateral surface of case body 210. In other words, cooling device 20 is provided to be in contact with case 200 in the direction orthogonal to the direction of stacking of power storage cells 101.

Insulating sheet 300 covers an inner surface of case body 210 and an inner surface of closing plate 220. Insulating sheet 300 may cover an upper surface and a lower surface of case body 210, as shown in Fig. 2.

Filling portion 400 is made of an insulating material. Preferably, filling portion 400 is made of a thermally conductive material. Filling portion 400 is formed by injecting the material (in the present embodiment, a potting material) into case 200 through inlet h of case 200.

Filling portion 400 includes a tip covering portion 410 that covers the tip of protrusion 122, as shown in Fig. 2. Tip covering portion 410 entirely covers protrusion 122 together with partly covering portion 142 of adhesive member 140. Specifically, partly covering portion 142 and tip covering portion 410 constitute a covering portion 15 (see Fig. 2) that covers protrusion 122. Filling portion 400 may cover partly covering portion 142.

Preferably, filling portion 400 entirely covers bus bars 102, 13, 14. Preferably, filling portion 400 is in contact with insulating sheet 300 provided on the inner surface of case body 210 and insulating sheet 300 provided on the inner surface of closing plate 220. As a result, a relative displacement of power storage module 100 to case 200 is reduced.

As shown in Fig. 2, power storage device 10 may further include a restriction unit 500. Restriction unit 500 is placed between power storage module 100 and case body 210. Restriction unit 500 may be placed between a pair of power storage cells 101 adjacent to each other.

Restriction unit 500 restricts a relative displacement of power storage module 100 to case 200 in the direction of stacking of power storage cells 101. Restriction unit 500 is made of, for example, a material having dilatancy characteristics. Specifically, when each power storage cell 101 is displaced relative to case 200 in the direction of stacking at a low speed, such as when each power storage cell 101 expands, restriction unit 500 elastically deforms to absorb the expansion of each power storage cell 101. On the other hand, when each power storage cell 101 is displaced relative to case 200 in the direction of stacking at a relatively high speed, such as when power storage device 10 vibrates, restriction unit 500 exhibits a relatively high modulus of elasticity, thereby restricting a relative displacement of each power storage cell 101 to case 200. This reduces resonance of power storage module 100 when power storage device 10 vibrates.

As described above, in power storage device 10 of the present embodiment, protrusion 122 of current collector plate 120, protruding from laminated film 130, is covered by covering portion 15. Even when the electrolyte solution leaks out of laminated film 130, thus, a short circuit between power storage cells 101 is reduced.

In the present embodiment, current collector plate 120 and bus bar 102 are cooled by cooling device 20 via filling portion 400 made of a thermally conductive material from the lateral portion of case 200 in the direction orthogonal to the direction of stacking. Current collector plate 120 and bus bar 102 are made of metal, and accordingly, power storage module 100 is cooled effectively.

Although the embodiment described above has illustrated the example in which partly covering portion 142 and tip covering portion 410 constitute covering portion 15, the configuration of covering portion 15 is not limited thereto. For example, adhesive member 140 may not protrude from laminated film 130, and filling portion 400 may entirely cover protrusion 122. In this case, a part of filling portion 400 forms covering portion 15. Alternatively, in this case, filling portion 400 may cover an end of laminated film 130.

It will be appreciated by a person skilled in the art that the exemplary embodiment described above provides specific examples of the following aspects.

A power storage device in the embodiment described above includes a plurality of power storage cells, a case for accommodating the plurality of power storage cells, and a covering portion made of an insulating material and covering a part of each of the plurality of power storage cells. Each of the plurality of power storage cells includes a plurality of electrode bodies, a current collector plate connected to the plurality of electrode bodies, a laminated film covering the plurality of electrode bodies and a part of the current collector plate, and an electrolyte solution filling the laminated film. The current collector plate includes a protrusion protruding from the laminated film. The covering portion covers the protrusion.

In this power storage device, since the protrusion of the current collector plate, protruding from the laminated film, is covered by the covering portion, a short circuit between the power storage cells is reduced even when the electrolyte solution leaks out of the laminated film.

The power storage device may further include an insulating sheet covering an inner surface of the case.

Thus, even when the electrolyte solution leaks out of the laminated film, the case and the power storage cell are restrained from becoming conductive via the electrolyte solution.

The power storage device may further include a filling portion made of an insulating material and filling the case. Preferably, each of the plurality of power storage cells further includes an adhesive member for bonding the laminated film to the current collector plate, the adhesive member includes a partly covering portion covering a part of the protrusion, the filling portion includes a tip covering portion covering a tip of the protrusion, and the partly covering portion and the tip covering portion constitute the covering portion.

Although the present disclosure has been described and illustrated in detail, it is clearly understood that the same is by way of illustration and example only and is not to be taken by way of limitation, the scope of the present disclosure being interpreted by the terms of the appended claims.

## Claims

1. A power storage device (1) comprising:
a plurality of power storage cells (101);
a case (200) for accommodating the plurality of power storage cells; and
a covering portion (15) made of an insulating material and covering a part of each of the plurality of power storage cells,
each of the plurality of power storage cells (101) including
a plurality of electrode bodies (110),
a current collector plate (120) connected to the plurality of electrode bodies,
a laminated film (130) covering the plurality of electrode bodies and a part of the current collector plate, and
an electrolyte solution filling the laminated film,
the current collector plate (120) including a protrusion (122) protruding from the laminated film,
the covering portion (15) covering the protrusion (122).

2. The power storage device according to claim 1, further comprising an insulating sheet (300) covering an inner surface of the case.

3. The power storage device according to claim 1 or 2, further comprising a filling portion (400) made of an insulating material and filling the case, wherein
each of the plurality of power storage cells (101) further includes an adhesive member (140) for bonding the laminated film to the current collector plate,
the adhesive member (140) includes a partly covering portion (142) covering a part of the protrusion,
the filling portion (400) includes a tip covering portion (410) covering a tip of the protrusion, and
the partly covering portion (142) and the tip covering portion (410) constitute the covering portion (15).
